# EUROPEAN PATENT APPLICATION

(11) **EP 4 725 672 A1**
(43) Date of publication of application: **15.04.2026**
(21) Application number: 24823711.7
(22) Date of filing: 12.06.2024
(51) Int. Cl.: B29C 33/38, B29C 33/42, G02B 5/124

(54) **MASTER MOLD FOR MANUFACTURING RETRO-REFLECTIVE SHEET MOLD AND MANUFACTURING METHOD THEREFOR**

(30) Priority: 12.06.2023 KR 20230075071
(71) Applicant: Reflomax Co., Ltd., Hwaseong-si, Gyeonggi-do 18255 (KR)
(72) Inventor: KIM, Hyen Dae, Gwangmyeong-si, Gyeonggi-do 14311 (KR); KIM, Tae Hong, Gwangmyeong-si, Gyeonggi-do 14311 (KR)
(74) Representative: Moosedog Oy
(86) International application number: PCT/KR2024/008090
(87) International publication number: WO 2024/258194

(57) **Abstract**

A master mold for manufacturing a mold for a retro-reflective sheet and a method of manufacturing the master mold are disclosed. The master mold used to manufacture the mold for the retro-reflective sheet includes a lower layer, an upper layer on the lower layer, and unit master molds on the upper layer, wherein the unit master molds are continuously aligned in a horizontal direction and a vertical direction without being spaced apart from each other, each unit master mold includes a first surface and a second surface that are in contact with each other to form a first angle, and a third surface and a fourth surface that are spaced apart from each other with the first surface and the second surface therebetween, the third surface and the fourth surface are inclined with respect to each other, and the first surface and the second surface are in contact with the third surface and the fourth surface.

## Description

### Technical Field

The present disclosure relates to the manufacture of a mold for manufacturing a reflective sheet or a reflective tape, and more particularly, to a master mold used to manufacture a mold for a retro-reflective sheet capable of increasing reflectivity to oblique incident light and a method of manufacturing the master mold.

### Background Art

A reflective sheet refers to a sheet for reflecting incident light. The reflective sheet may also be referred to as a reflective tape. The reflective sheet may display various colors depending on the materials of a retro-reflective area. Therefore, when a reflective sheet is used, the identifiability and visibility of an object to which the reflective sheet is attached may be improved. Due to its characteristics, the reflective sheet may be applicable to various fields, for example, the transportation field such as vehicles, the traffic-related field, the safety field, and the security field, and may also be applied to product design.

Among types of reflective sheets, a retro-reflective sheet has high reflectivity to vertical incident light that is perpendicularly incident on a front surface of the retro-reflective sheet but has relatively low reflectivity to light that is obliquely incident on the front surface of the retro-reflective sheet, that is, oblique incident light, and thus, the retro-reflective sheet may not be practical.

Accordingly, there is an increasing interest in retro-reflective sheets with high reflectivity to oblique incident light. Thus, molds for such retro-reflective sheets are required to manufacture retro-reflective sheets with high reflectivity to oblique incident light.

### Disclosure

### Technical Problem

In an embodiment, a master mold is provided to improve the manufacturing efficiency of a mold for manufacturing a retro-reflective sheet with relatively high reflectivity to oblique incident light (hereinafter, referred to as a 'mold for a retro-reflective sheet').

In an embodiment, a master mold capable of increasing the cost-effectiveness of a mold for a retro-reflective sheet is provided.

In an embodiment, a master mold capable of reducing manufacturing costs of a mold for a retro-reflective sheet is provided.

In an embodiment, a method of manufacturing such a master mold is provided.

### Solution to Problem

A master mold used to manufacture a mold for a retro-reflective sheet according to an embodiment includes a lower layer, an upper layer provided on the lower layer, and a plurality of unit master molds provided on the upper layer.

The plurality of unit master molds are continuously aligned in a horizontal direction and a vertical direction without being spaced apart from each other.

Each of the plurality of unit master molds includes
a first surface and a second surface that are in contact with each other to form a first angle, and a third surface and a fourth surface that are spaced apart from each other with the first surface and the second surface therebetween, the third surface and the fourth surface are inclined with respect to each other, and the first surface and the second surface are in contact with the third surface and the fourth surface.

In an embodiment, one of the third surface and the fourth surface may be a vertical plane, and the other thereof may form an acute angle with respect to the vertical plane.

In an embodiment, an edge formed by contact between the first surface and the second surface may be connected to an upper vertex of the third surface and an upper vertex of the fourth surface. One of the third surface and the fourth surface may be a vertical plane, and a length of the edge may be same as a height of the vertical plane.

In an embodiment, a distance between an upper vertex of a vertical plane of a first unit master mold among the plurality of unit master molds and an upper vertex of a surface of a second unit master mold adjacent to the first unit master mold, the surface being other than a vertical plane among a first surface and a second surface, may be same as a length of the edge.

According to an embodiment, a method of manufacturing a master mold includes forming, on a surface of a substrate, a first pattern having symmetry in a first direction, and asymmetrically removing a portion of the first pattern in a second direction that is perpendicular to the first direction, wherein the first pattern comprises a pattern enabling a second pattern having a triangular cross-section to be formed on the surface of the substrate, a portion of the second pattern is also removed in the removing of the portion of the first pattern, and a vertical plane and an inclined plane that is inclined with respect to the vertical plane are formed as the portion of the second pattern is removed.

In an embodiment, the forming, on the surface of the substrate, of the first pattern having symmetry in the first direction may be performed at least twice, and then the asymmetrically removing of the portion of the first pattern may be performed.

In an embodiment, the removing of the portion of the first pattern may be performed at least twice.

In an embodiment, in the forming of the first pattern, a first engraving machine may be used, and the first pattern may include a V-shaped groove.

In an embodiment, in the asymmetrically removing of the portion of the first pattern, a second engraving machine may be used, and a tip of the second engraving machine, which comes into contact with the substrate, may include a vertical plane and an inclined surface that forms an acute angle with the vertical plane.

### Advantageous Effects

A disclosed master mold for obtaining a mold for manufacturing a retro-reflective sheet is completed by forming a mold pattern directly on a surface of a flat surface, wherein the mold pattern is engraved by simply moving two different engraving machines sequentially in mutually perpendicular directions.

As described, because the mold pattern is formed on a plane by simply moving the two engraving machines in the mutually perpendicular directions, a pattern forming task is easy, and the pattern formed is not complicated. Therefore, a task of transferring the mold pattern formed on the master mold to another mold substrate may be easy, and the transfer of the mold pattern may be completely achieved. In addition, because the mold pattern is not complicated and is formed on the plane, the transferred mold pattern is not damaged even during repeated transfers, and thus, the mold pattern may be cost-effective.

### Description of Drawings

FIG. 1 and FIGS. 3 to 7 are perspective views illustrating, in stages, a method of manufacturing a master mold used to manufacture a mold for a retro-reflective sheet with high reflectivity to oblique incident light, according to an embodiment.
FIG. 2 is a perspective view illustrating an example of a first engraving machine used for a method of manufacturing a master mold, according to an embodiment.
FIG. 8 is a perspective view illustrating an example of a second engraving machine used for a method of manufacturing a master mold, according to an embodiment.
FIG. 9 is a perspective view of a unit master mold included in the master mold of FIG. 7.
FIG. 10 is a plan view of the master mold of FIG. 7.
FIG. 11 is a cross-sectional view taken along a line 11-11' of FIG. 10.
FIG. 12 is a cross-sectional view taken along a line 12-12' of FIG. 10.

### Best Mode

A master mold used to manufacture a mold for a retro-reflective sheet according to an embodiment includes a lower layer, an upper layer provided on the lower layer, and a plurality of unit master molds provided on the upper layer.

The plurality of unit master molds are continuously aligned without being spaced apart from each other both in a horizontal direction and a vertical direction.

Each of the plurality of unit master molds includes
a first surface and a second surface that are in contact with each other to form a first angle and a third surface and a fourth surface that are spaced apart from each other with the first surface and the second surface therebetween. The third surface and the fourth surface are inclined with respect to each other, and the first surface and the second surface may come into contact with the third surface and the fourth surface.

### Mode for the Invention

Hereinafter, according to an embodiment, a master mold used to manufacture a mold for a retro-reflective sheet capable of increasing reflectivity to oblique incident light, and a method of manufacturing the master mold are described in detail with reference to the attached drawings, and in the drawings, sizes of components or thicknesses of layers and regions may be exaggerated for clarity and convenience of explanation. In addition, one or more embodiments below are only examples, and various modifications may be made to these embodiments. In addition, in a layer structure described below, the expression "upper" or "on" may include not only a part directly in contact and immediately above, but also a part above another member in a non-contact manner.

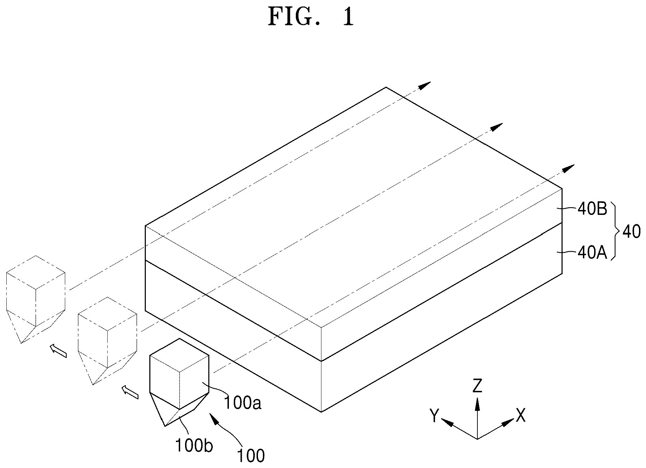

FIGS. 1 to 8 are perspective views illustrating, in stages, a method of manufacturing a master mold used to manufacture a mold for a retro-reflective sheet capable of increasing reflectivity to oblique incident light and perspective views illustrating components used in the method, according to an embodiment.

As shown in FIG. 1, a mold substrate 40 is prepared first to manufacture a master mold. In an embodiment, the mold substrate 40 may include a lower layer 40A and an upper layer 40B that are sequentially stacked. The lower layer 40A may be referred to as a lower substrate. The upper layer 40B may be referred to as an upper substrate. In an embodiment, the lower layer 40A may include a first metal layer, and the upper layer 40B may include a material layer including metal. In an embodiment, the first metal layer may be a stainless steel layer or include the same. In an embodiment, the upper layer 40B may include a second metal layer or an alloy layer. In an embodiment, the material of the second metal layer may be the same as or different from that of the first metal layer. In an embodiment, the second metal layer may include a copper (Cu) layer, but is not limited thereto. In an embodiment, the alloy layer may include nickel phosphorus (NiP), but is not limited thereto.

To manufacture the mold substrate 40 into a master mold, a first engraving machine 100 is first moved on a surface of the upper layer 40B in a first direction (e.g., an X-axis direction). In an embodiment, the surface of the upper layer 40B may be a surface parallel to a plane defined by the X axis and the Y axis (an X-Y plane).

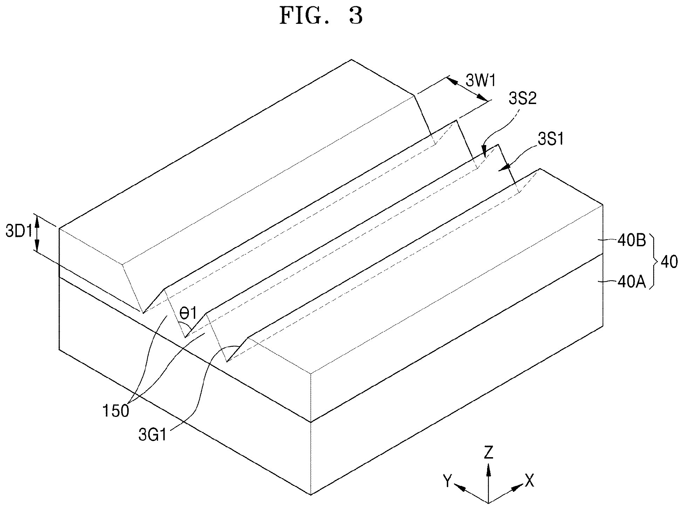

The first engraving machine 100 may move from one end of the surface of the upper layer 40B to the other end thereof while being in contact with the surface of the upper layer 40B. In such a movement, the contact state between the first engraving machine 100 and the upper layer 40B may be set by considering a pattern formed on the surface of the upper layer 40B. For example, as shown in FIG. 3, when the pattern formed on the surface of the upper layer 40B is a first pattern 3G1 that has an inverted triangular cross-section or a V-shaped groove, the degree or condition of contact between the tip 100b of the first engraving machine 100 and the upper layer 40B may be set by considering the shape of the first pattern 3G1 to be formed on the surface of the upper layer 40B. The shape of a first pattern 3G1 may be determined by the shape of a tip 100b of the first engraving machine 100, and a size of the first pattern 3G1 may be determined based on the degree or conditions of contact between the tip 100b of the first engraving machine 100 and the upper layer 40B.

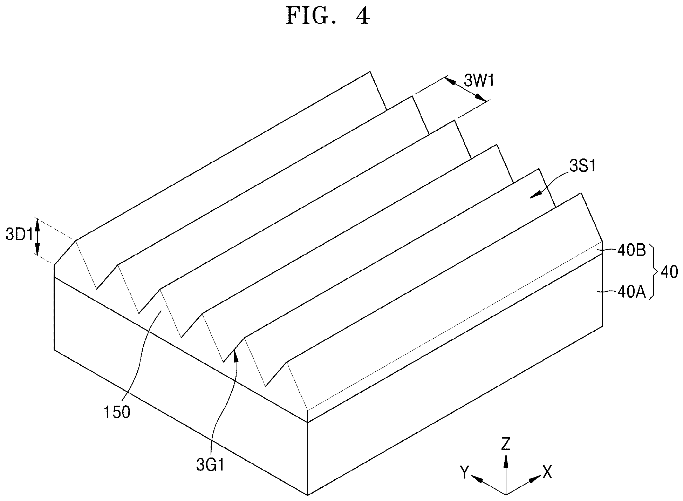

After the first engraving machine 100 forms a single pattern by moving on a surface of the upper layer 40B in the first direction, the first engraving machine 100 is moved to its original position and then moved in a second direction (e.g., a Y-axis direction) perpendicular to the first direction, and then in the first direction, thereby forming a pattern on the surface of the upper layer 40B. As shown in FIG. 4, by repeating the above process, a plurality of patterns, that is, V-shaped patterns 3G1, which are parallel to the first direction, may be formed on the entire surface of the upper layer 40B.

Referring to FIG. 3 or 4, a single V-shaped first pattern 3G1 may be formed in a straight line from one end to the other end of the upper layer 40B in the first direction, and a width 3W1 of an upper portion of the first pattern 3G1 in the second direction may be constant or substantially constant over the entire length of the first pattern 3G1.

The expression "substantially constant" may indicate that a change in the width of the first pattern 3G1 falls within an allowable error range or a range of the width change that does not affect the operation characteristics of a result manufactured using a mold formed according to the example manufacturing method.

In an embodiment, the width 3W1 of the upper portion of the first pattern 3G1, that is, the maximum width of the first pattern 3G1, may be in a range of about 1 µm to about 500 µm, but is not limited thereto. For example, the width 3W1 of the upper portion of the first pattern 3G1 may be about 100 µm, but is not limited thereto.

Because the cross-section of the first pattern 3G1 is a V-shaped groove, the width 3W1 of the first pattern 3G1 may decrease depending on the depth of the first pattern 3G1. In other words, the width 3W1 of the first pattern 3G1 gradually increases from the bottom to the top of the first pattern 3G1.

In an embodiment, a depth 3D1 of the first pattern 3G1 may be in a range of about 50 µm to about 150 µm, but is not limited thereto. In an embodiment, the depth 3D1 of the first pattern 3G1 may be about 90 µm.

The plurality of first patterns 3G1 may be formed adjacent to each other, and two adjacent first patterns 3G1 may be in contact with each other. For example, two adjacent first patterns 3G1 may be formed to have their boundaries in contact with each other.

Because the cross-section of the first pattern 3G1 is a V-shaped groove, as two adjacent first patterns 3G1 are formed, second patterns 150 each having a triangular cross-section are naturally formed between the two first patterns 3G1. As a result, the plurality of first patterns 3G1 are formed on a surface of the upper layer 40B, and the plurality of second patterns 150 each having a triangular cross-section are also formed on the surface of the upper layer 40B. Accordingly, the plurality of second patterns 150 may be present between the plurality of first patterns 3G1, and the plurality of first patterns 3G1 may be present between the plurality of second patterns 150.

Because the second pattern 150 is a result of forming the first pattern 3G1 having a V shape, a change in the width of the second pattern 150 may be opposite to a change in the width 3W1 of the first pattern 3G1. That is, the width of the second pattern 150 is greatest at the bottom thereof and decreases towards the top. In addition, the bottom width (the maximum width) of the second pattern 150 may be the same as the upper width (the maximum width) of the first pattern 3G1.

The second pattern 150 may include a first inclined surface 3S1 and a second inclined surface 3S2. The first inclined surface 3S1 and the second inclined surface 3S2 may each be a plane parallel to the first direction (e.g., the X-axis direction) and perpendicular to the plane defined by the Y axis and the Z axis (the Y-Z plane).

The first inclined surface 3S1 and the second inclined surface 3S2 may be two inclined inner surfaces of the first pattern 3G1 that is a V-shaped groove. As a result, the first inclined surface 3S1 and the second inclined surface 3S2 may be surfaces positioned at the boundary of the first pattern 3G1 and the second pattern 150 and shared by the first pattern 3G1 and the second pattern 150.

The two inclined surfaces 3S1 and 3S2 of the first pattern 3G1 are inclined with respect to each other at a first angle θ1. That is, the angle between the first inclined surface 3S1 and the second inclined surface 3S2 is the first angle θ1. This indicates that the angle between the first inclined surface 3S1 and the second inclined surface 3S2 in the second pattern 150 is also the first angle θ1.

The areas of the first inclined surface 3S1 and the second inclined surface 3S2 may be the same or substantially the same as each other.

The first engraving machine 100 may be referred to as a graver, a carving knife, a bite, a cutting tool, or the like. The first engraving machine 100 includes a body 100a and a tip 100b provided on the lower portion of the body 100a. The body 100a may be referred to as a handle. The tip 100b may be referred to as a contact end, a contact portion, a blade, or the like. The body 100a may be a portion that is directly coupled to a driving device (e.g., a machine tool) moving the first engraving machine 100. The tip 100b may be a portion directly in contact with the upper layer 40B and directly used to form the first pattern 3G1 on the surface of the mold substrate 40. Depending on the degree to which the tip 100b is in initial contact with the upper layer 40B (e.g., the degree of contact area), the size of the cross-section of the first pattern 3G1 formed on the mold substrate 40 may vary.

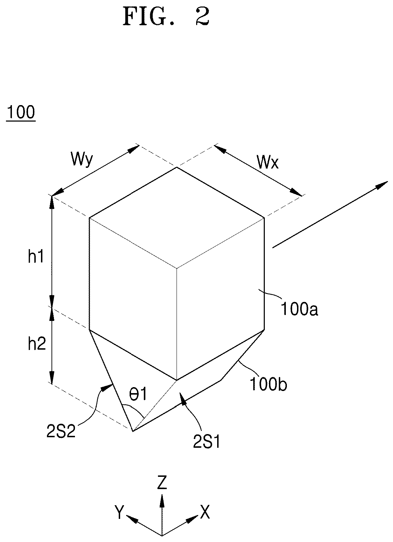

FIG. 2 three-dimensionally illustrates an example of the first engraving machine 100.

Referring to FIG. 2, the body 100a of the first engraving machine 100 may be a square pillar shape, and the tip 100b may be attached (connected) to the bottom surface of the square pillar. The body 100a may have a first width Wx in the X-axis direction and a second width Wy in the Y-axis direction. In an embodiment, the first width Wx and the second width Wy may have a constant ratio. In an embodiment, the first width Wx and the second width Wy may be the same as or different from each other. The tip 100b may cover the entire bottom surface of the body 100a. The width of the tip 100b in the X-axis direction may be constant and the same as that of the body 100a. The width of the tip 100b in the Y-axis direction or a direction parallel to the Y-axis direction may not be constant and may become narrower towards the bottom of the tip 100b. The change in the width of the tip 100b in the Y-axis direction may become constant towards the bottom of the tip 100b. Accordingly, the tip 100b may include: two surfaces of a triangle that are spaced apart from each other by a distance corresponding to the first width Wx in the X-axis direction; a first inclined surface 2S1 having a rectangular shape that connects corresponding first inclined sides of two triangles between the two triangles; and a second inclined surface 2S2 having a rectangular shape that connects corresponding second inclined sides of the two triangles between the two triangles. The sides corresponding to the first inclined surface 2S1 and the second inclined surface 2S2 are in contact with each other at the bottom of the tip 100b.

That is, the first inclined surface 2S1 and the second inclined surface 2S2 come into contact with each other at the bottom of the tip 100b and share one side. This side is parallel to the X axis and has a length corresponding to the first width Wx. In addition, the vertices of the two surfaces of the triangle are connected to each other by the side shared by the first inclined surface 2S1 and the second inclined surface 2S2. Consequently, the first inclined surface 2S1 and the second inclined surface 2S2 are located between the two surfaces of the triangle and have shapes that extend (diverge) from the bottom to the top of the tip 100b. In an embodiment, the first inclined surface 2S1 and the second inclined surface 2S2 may spread at the first angle θ1. The first angle θ1 may be referred to as the angle between the first inclined surface 2S1 and the second inclined surface 2S2. The first angle θ1 may be an acute angle and may be 90 degrees or less. In an embodiment, the first angle θ1 may be at least 45 degrees and 90 degrees or less.

Because the first pattern 3G1 and the second pattern 150 are formed on the surface of the upper layer 40B by the first engraving machine 100, the angle between two inclined inner surfaces of the first pattern 3G1 having a V shape may be determined by the first angle θ1, and the angle between the first inclined surface 3S1 and the second inclined surface 3S2 of the second pattern 150 may also be determined by the first angle θ1.

The body 100a may have a first length h1 in a direction perpendicular to one surface of the upper layer 40b, that is, a direction perpendicular to the X-Y plane (e.g., the Z-axis direction), and the tip 100b may have a second length h2. The first length h1 may be the same as or different from the second length h2. In an embodiment, the second length h1 may be less than the first length h1. In an embodiment, the second length h1 may be determined by considering the size (the depth, the maximum width, etc.) of the first pattern 3G1 to be formed on the surface of the upper layer 40B. In addition, because the first angle θ1between the first inclined surface 2S1 and the second inclined surface 2S2 may differ according to the second length h2, the second length h2 may be determined by considering the first angle θ1 between the first inclined surface 2S1 and the second inclined surface 2S2. When the second length h2 is constant, the first angle θ1 between the first inclined surface 2S1 and the second inclined surface 2S2 varies according to the width of the upper portion of the tip 100b in the Y-axis direction (the distance between an upper side of the first inclined surface 2S1 and an upper side of the second inclined surface 2S2), and thus, in the structure in which the second length h2 is constant, the width of the upper portion of the tip 100b in the Y-axis direction may be determined by considering the first angle θ1 between the first inclined surface 2S1 and the second inclined surface 2S2.

The second length h2 may be determined by considering the depth 3D1 of the first pattern 3G1, and in an embodiment, the second length h2 may be in a range of about 50 µm to about 150 µm, for example, about 90 µm. In an embodiment, the width of the upper portion of the tip 100b in direct contact with the bottom surface of the body 100a may be determined by considering the maximum width 3W1 of the first pattern 3G1 and may be from about 1 µm to about 500 µm, but is not limited thereto. For example, the width of the upper portion of the tip 100b may be about 100 µm.

The tip 100b may include a material with higher hardness than the material of the upper layer 40B. In an embodiment, the tip 100b may include a material containing carbon; for example, the tip 100b may be a diamond tip, but is not limited thereto. In an embodiment, the body 100a may include a metal material or a material other than metals.

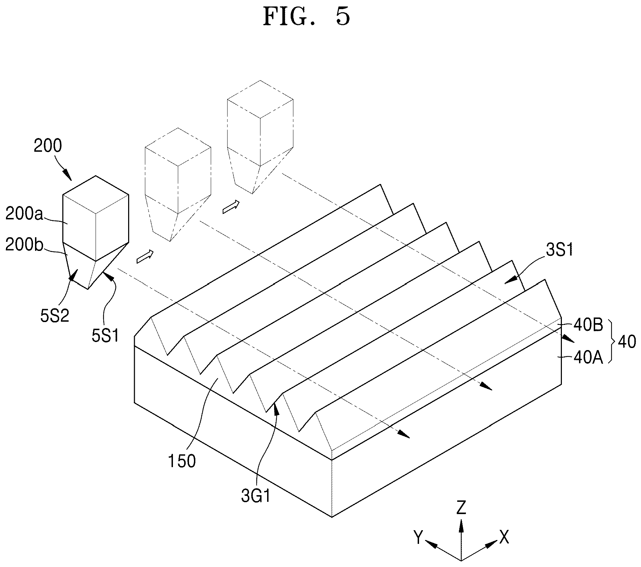

After the first pattern 3G1 and the second pattern 150 are formed, as shown in FIG. 5, a second engraving machine 200 having a different structure from that of the first engraving machine 100 is moved in a direction perpendicular to the lengths of the first pattern 3G1 and the second pattern 150 (that is, a direction perpendicular to the X axis or parallel to the Y axis) to form third patterns on one surface of the upper layer 40B, on which the first pattern 3G1 and the second pattern 150 are formed. The second engraving machine 200 may be moved from one end of the upper layer 40B to the other end thereof across the first pattern 3G1 and the second pattern 150 in the direction perpendicular to the lengths of the first pattern 3G1 and the second pattern 150. The second engraving machine 200 may start at a height at which the first pattern 3G1 and the second pattern 150 may be cut and may maintain the height to the other end of the upper layer 40B. The second engraving machine 200 may be moved in the vertical direction to a height at which the first pattern 3G1 and the second pattern 150 may be cut to a depth corresponding to the depth 3D1 of the first pattern 3G1.

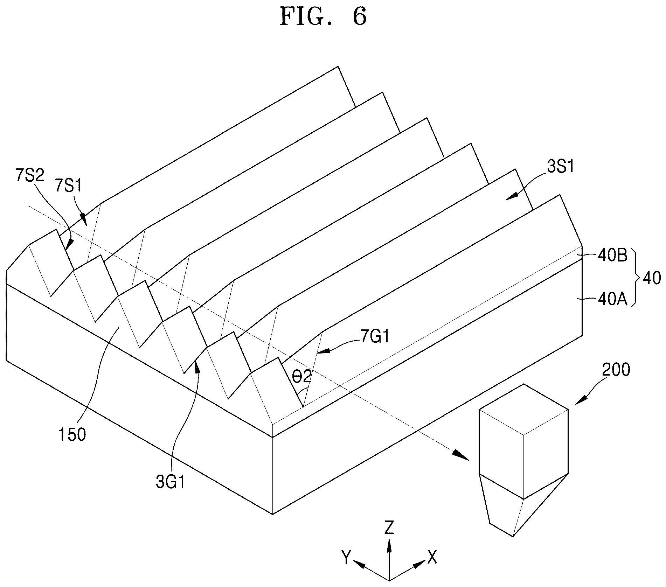

As the second engraving machine 200 is moved as described above, as shown in FIG. 6, a single third pattern 7G1 is formed on one surface of the upper layer 40B while portions of the first pattern 3G1 and the second pattern 150 are removed. After a single third pattern 7G1 is formed, the second engraving machine 200 is moved to its original position, and according to a movement value that is set, the second engraving machine 200 is moved to a second position in the first direction (the X-axis direction). In an embodiment, after the third pattern 7G1 is formed, the second engraving machine 200 may be directly moved to the second position without being moved to its original position.

To form another third pattern 7G1, the second engraving machine 200 moved to the second position may be moved in the direction perpendicular to the lengths of the first pattern 3G1 and the second pattern 150 under the same movement conditions applied when the single third pattern 7G1 is formed. In an embodiment, the second position may be a position where the third pattern 7G1 formed immediately before may be spaced apart from another third pattern 7G1 to be formed by the second engraving machine 200 starting from the second position, in the direction parallel to the first pattern 3G1 and the second pattern 150 (e.g., the X-axis direction).

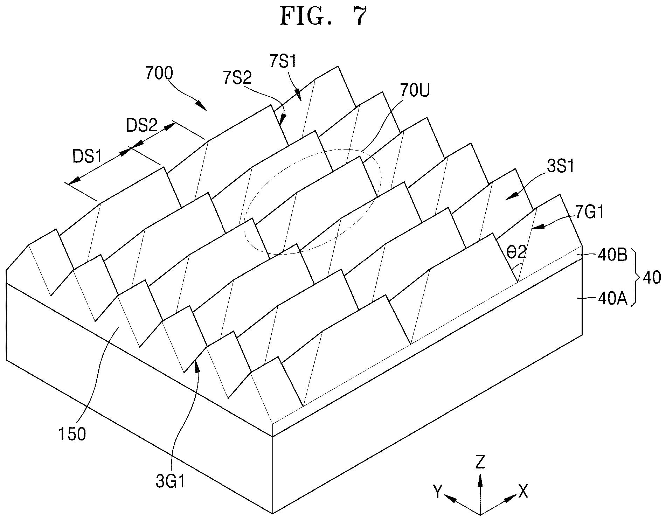

By repeating such a process, a plurality of third patterns 7G1 may be formed over the entire one surface of the upper layer 40B as shown in FIG. 7, and as a result, a master mold 700 for obtaining a mold for manufacturing a retro-reflective sheet capable of increasing reflectivity to oblique incident light is formed.

The plurality of third patterns 7G1 are formed apart from each other on the master mold 700 in the X-axis direction. The distance (gap) between the plurality of third patterns 7G1 in the X-axis direction may be constant or substantially constant, but may be non-constant.

The plurality of third patterns 7G1 may be respectively formed on the plurality of second patterns 150. The third pattern 7G1 may be a portion from which a portion of the second pattern 150 is removed, may be regarded as a groove formed in the second pattern 150, and may include a third surface 7S1 inclined with respect to the X-Y plane and the Y-Z plane and a fourth surface 7S2 that is parallel to the Y-Z plane, perpendicular to the X axis, and perpendicular to the X-Z plane. Therefore, the fourth plane 7S2 may be a vertical plane that is perpendicular to one surface of the upper layer 40B. The third surface 7S1 and the fourth surface 7S2 may share a bottom side with each other. With respect to the fourth surface 7S2, the third surface 7S1 may be a plane inclined at a second angle θ2. In other words, the angle between the third surface 7S1 and the fourth surface 7S2 may be the second angle θ2. The second angle θ2 may be determined by the structure of a tip 200b in direct contact with the first pattern 3G1 and the second pattern 150 and used by the second engraving machine 200 to remove portions of the first pattern 3G1 and the second pattern 150. In other words, the tip 200b of the second engraving machine 200 may be designed by considering the shape of the third pattern 7G1. The second angle θ2 may be an acute angle. For example, the second angle θ2 may be at least 30 degrees and 90 degrees of less.

The plurality of third patterns 7G1 may respectively exist on the second patterns 150 and may be spaced apart from each other by a first distance DS1. The first distance DS1 may correspond to a distance between the third surface 7S1 of one selected third pattern 7S1 and the fourth surface 7S2 of a third pattern 7G1 that is adjacent to the one selected third pattern 7G1. In an embodiment, the first distance DS1 may be the same as or substantially the same as the depth 3D1 of the first pattern 3G1, but is not limited thereto. In an embodiment, a second distance DS2 between an upper vertex of the third surface 7S1 of the third pattern 7G1 and a vertex of a corresponding fourth surface 7S2 may be the same as or substantially the same as the first distance DS1, but is not limited thereto.

Because the third surface 7S1 and the fourth surface 7S2 of a single third pattern 7G1 are surfaces formed by cutting the second pattern 150 having a triangular cross-section in a direction perpendicular to the length of the second pattern 150, the geometric shapes of the third surface 7S1 and the fourth surface 7S2 may also be triangles. The size (or area) of the third surface 7S1 may be different from that of the fourth surface 7S2.

The depth of the third pattern 7G1 may be the same as or substantially the same as the depth of the first pattern 3G1 or the height of the second pattern 150. The depth of the third pattern 7G1 may refer to the height of the fourth surface 7S2 of the third pattern 7G1.

The second engraving machine 200 may include a body 200a and the tip 200b. The body 200a may be a portion that is coupled to or directly connected to a driving device (e.g., a machine tool) of the second engraving machine 200. The tip 200b may be a tip in direct contact with the upper layer 40B and manufactured with a material having higher hardness than that of the upper layer 40B. For example, the material of the tip 200b may be the same as or different from that of the tip 100b of the first engraving machine 100. For example, the tip 100b of the first engraving machine 100 may include a carbon crystal tip (e.g., a diamond tip) having first hardness, and the tip 200b of the second engraving machine 200 may include a tip including a carbon crystal or another material having second hardness, the second hardness being different from the first hardness. The first hardness and the second hardness may be greater than the hardness of the upper layer 40B.

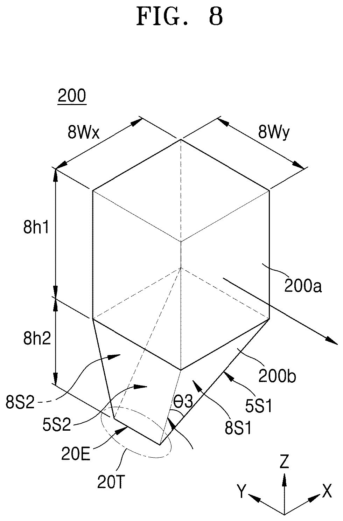

FIG. 8 illustrates an example of the second engraving machine 200.

Referring to FIG. 8, the body 200a of the second engraving machine 200 may have a square pillar shape, but the shape is not limited thereto. The tip 200b of the second engraving machine 200 may be attached (connected) to the bottom surface of the body 200a. The body 200a may have a third width 8Wx in the X-axis direction and a fourth width 8Wy in the Y-axis direction. In an embodiment, the third width 8Wx and the fourth width 8Wy may have a constant ratio. In an embodiment, the third width 8Wx and the fourth width 8Wy may be the same as or different from each other. The third width 8Wx and the fourth width 8Wy in the X-axis direction and the Y-axis direction may be constant from an upper portion to a lower portion of the body 200a.

The upper surface of the tip 200b may entirely cover the bottom surface of the body 200a, or an opposite relationship may be implemented, but one or more embodiments are not limited thereto. For example, the area of the upper surface of the tip 200b may be the same as or different from that of the bottom surface of the body 200a. In an embodiment, the area of the upper surface of the tip 200b may be less or greater than the bottom surface of the body 200a.

The widths of the tip 200b in the X-axis direction and the Y-axis direction may vary in the lengthwise direction of the tip 200b. For example, the width of the tip 200b in the X-axis direction may decrease from the upper portion of the tip 200b to the lower portion thereof, and the width of the tip 200b in the Y-axis direction may also decrease from the upper portion of the tip 200b to the lower portion thereof. Accordingly, the tip 200b may have a shape that is pointed downwards overall, but a lower portion 20T of the tip 200b includes a straight edge 20E, like a blade, rather than a sharp point. The edge 20E may be a portion in which a first surface 5S1 of the tip 200b meets a second surface 5S2 thereof. The first surface 5S1 and the second surface 5S2 may be planes inclined with respect to each other and have widths that decrease towards the lower portion 20T of the tip 200b. The widths of the first surface 5S1 and the second surface 5S2 are narrowest at the lower portion 20T of the tip 200b. The edge 20E may be considered to be formed where portions of the first surface 5S1 and the second surface 5S2 with the narrowest widths meet each other. Therefore, the edge 20E may be a sharp portion like a blade of a knife. The second surface 5S2 of the tip 200b may be a plane parallel to the Y-Z plane and also be a plane that is perpendicular to the X axis and the X-Z plane. The first surface 5S1 and the second surface 5S2 of the tip 200b may have shapes extending (diverging) from the edge 20E towards the top of the tip 200b, and thus, the first surface 5S1 and the second surface 5S2 may be planes inclined with respect to each other. The first surface 5S1 and the second surface 5S2 may form a third angle θ3. That is, the angle between the first surface 5S1 and the second surface 5S2 is the third angle θ3. In other words, with respect to the second surface 5S2, the first surface 5S1 may be inclined at the third angle θ3, and the first surface 5S1 and the second surface 5S2 are inclined at the same angle with respect to the Y-Z plane. In an embodiment, the third angle θ3 may be an acute angle, and for example, the third angle θ3 may be at least 30 degrees and 90 degrees or less; however, one or more embodiments are not limited thereto. The angle θ2 between the third surface 7S1 and the fourth surface 7S2 of the third pattern 7G1 may be determined by the third angle θ3. Therefore, the third angle θ3 that is the angle between the first surface 5S1 and the second surface 5S2 of the tip 200b may be the same as the second angle θ2 that is the angle between the third surface 7S1 and the fourth surface 7S2 of the third pattern 7G1.

The tip 200b includes a third surface 8S1 and a fourth surface 8S2 that are spaced apart from each other between the first surface 5S1 and the second surface 5S2 and inclined with respect to each other. The third surface 8S1 may be a front surface in the movement direction of the second engraving machine 200 (the - Y-axis direction), and the geometric shape of the third surface 8S1 is a triangle. One side of the third surface 8S1 forms one side of the upper surface of the tip 200b, and a vertex of the third surface 8S1 that is apart from the one side is connected to the edge 20E. The third surface 8S1 may be perpendicular to the first surface 5S1 and the second surface 5S2 and inclined with respect to the X-Z plane.

The fourth surface 8S2 may be a rear surface in the movement direction of the second engraving machine 200 and may be arranged symmetrically to the third surface 8S1. The geometric shape of the fourth surface 8S2 may be a triangle. One side of the fourth surface 8S2 forms one side of the upper surface of the tip 200b, and a vertex of the fourth surface 8S2 that is apart from the one side is connected to the edge 20E. The fourth surface 8S2 may be perpendicular to the first surface 5S1 and the second surface 5S2 and inclined with respect to the X-Z plane. The inclination angles of the third surface 8S1 and the fourth surface 8S2 with respect to the X-Z plane may be different from each other.

The body 200a may have a first length 8h1 in a direction perpendicular to one surface of the upper layer 40b, that is, a direction perpendicular to the X-Y plane (e.g., the Z-axis direction), and the tip 200b may have a second length 8h2. The first length 8h1 may be the same as or different from the second length 8h2. In an embodiment, the second length 8h1 may be less than the first length 8h1. In an embodiment, the second length 8h2 may be the same as or substantially the same as the second length h2 of the tip 100b of the first engraving machine 100.

The master mold 700 of FIG. 7 includes a plurality of unit master molds 70U formed on one surface of the upper layer 40B (e.g., the X-Y plane). The plurality of unit master molds 70U may be aligned to have a constant period or pitch in a horizontal direction (e.g., the Y axis) and a vertical direction (e.g., the X axis).

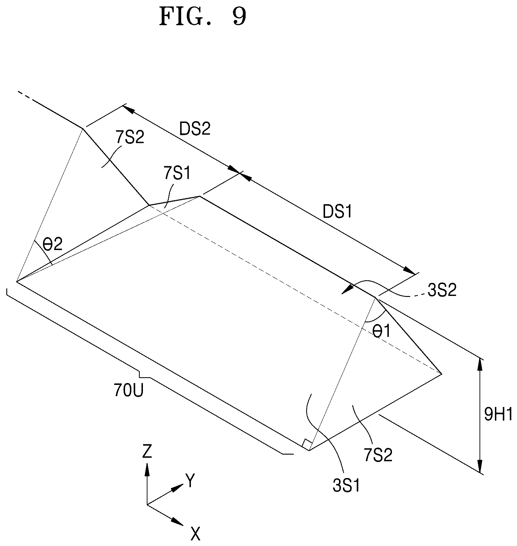

FIG. 9 illustrates a unit master mold 70U three-dimensionally. A fourth surface 7S2 on the left side of FIG. 9 is illustrated for convenience of explanation and may not be included in the unit master mold 70U.

Referring to FIG. 9, the unit master mold 70U includes four surfaces 7S1, 7S2, 3S1, and 3S2. Among the four surfaces 7S1, 7S2, 3S1, and 3S2, two surfaces 3S1 and 3S2 are surfaces formed during the formation of the first pattern 3G1 by using the first engraving machine 100 and two inclined surfaces of the second pattern 150 having a triangular cross-section, and the other two surfaces 7S1 and 7S2 are formed during the formation of the third pattern 7G1 by using the second engraving machine 200 and correspond to the fourth surface 7S2 that is a vertical plane and the third surface 7S1 that is inclined at an acute angle with respect to the fourth surface 7S2. The fourth surface 7S2 may be a plane perpendicular to one surface (e.g., the X-Y plane) of the upper layer 40B. The fourth surface 7S2 may be perpendicular to the X axis and parallel to the Y-Z plane. The direction of the fourth surface 7S2, that is, the direction perpendicular to the fourth surface 7S2, may be parallel to the X axis. Because the fourth surface 7S2 is a plane formed as the second pattern 150 is cut by the second engraving machine 200 in the direction perpendicular to length of the second pattern 150, the geometric shape of the fourth surface 7S2 becomes a triangle.

On the unit master mold 70U, the third surface 7S1 may be spaced apart from the fourth surface 7S2 by the first distance DS1, but may be connected to the fourth surface 7S2 of an adjacent unit master mold 70U through a shared bottom side. In other words, two adjacent unit master molds 70U may have a structure in which the fourth surface 7S2 and the third surface 7S1 share a bottom side. The second distance DS2 between the upper vertex of the third surface 7S1 of one unit master mold 70U and the upper vertex of the fourth surface 7S2 (the fourth surface 7S2 shown on the left side) of a unit master mold 70U, which is adjacent to the one unit master mold 70U, may be the same as or different from the first distance DS1. In an embodiment, a height 9H1 of the fourth surface 7S2 of the unit master mold 70U may be the same as or different from the first distance DS1 or the second distance DS2. The relationships among such measurements (i.e., the first distance DS1, the second distance DS2, and the height 9H1) may be set to increase the reflectivity of the retro-reflective sheet to oblique incident light.

As described above, the third surface 7S1 and the fourth surface 7S2 are simultaneously formed by the second engraving machine 200, the geometric shape of the third surface 7S1 may also be a triangle like the fourth surface 7S2. However, because the third surface 7S1 is inclined with respect to the fourth surface 7S2, the shapes and areas of the triangles of the third surface 7S1 and the fourth surface 7S2 may differ even though the geometric shapes of both the third surface 7S1 and the fourth surface 7S2 are triangular. For example, the area of the third surface 7S1 may be greater than that of the fourth surface 7S2. On the unit master mold 70U, the first surface 3S1 and the second surface 3S2 may be located between the third surface 7S1 and the fourth surface 7S2. The first surface 3S1 and the second surface 3S2 may be planes perpendicular with respect to the fourth surface 7S2. The upper edges of the first surface 3S1 and the second surface 3S2 may come into contact with each other, thus forming a single edge. The single edge is located between the upper vertices of the third surface 7S1 and the fourth surface 7S2 and connected to the upper vertices. The lower edges of the first surface 3S1 and the second surface 3S2 are spaced apart from each other and are connected to the bottom edges of the third surface 7S1 and the fourth surface 7S2. The first surface 3S1 and the second surface 3S2 have shapes that diverge downwards. In an embodiment, the first surface 3S1 and the second surface 3S2 may be inclined with respect to each other at the first angle θ1. Because the unit master mold 70U is a portion corresponding to a unit mold of a retro-reflective sheet mold, the first angle θ1 may be set to enhance the reflectivity of the retro-reflective sheet to oblique incident light.

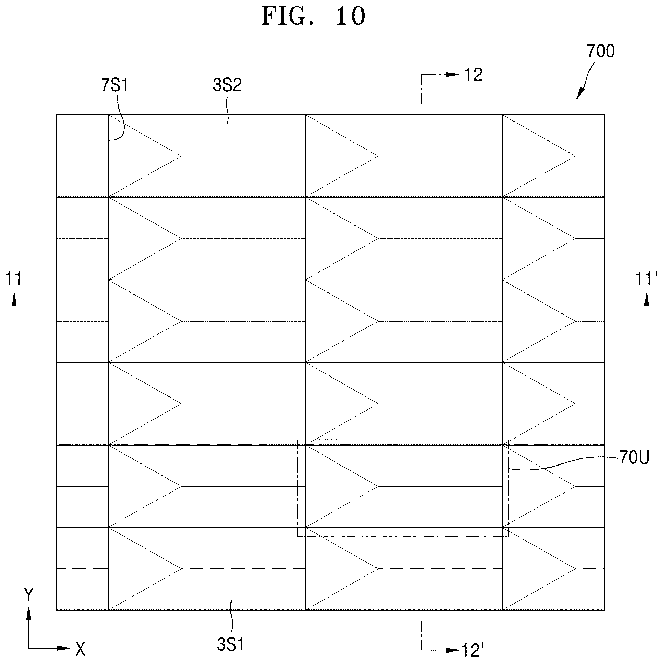

FIG. 10 is a plan view of the master mold 700 of FIG. 7.

Referring to FIG. 7, the plurality of unit master molds 70U are aligned on the master mold 700 in both the horizontal direction and the vertical direction. The unit master molds 70U that are adjacent in the horizontal direction and the vertical direction are attached to each other without overlapping each other.

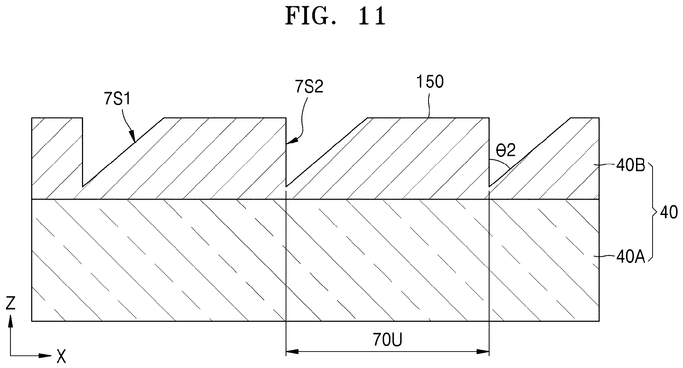

FIG. 11 shows a cross-section taken along a line 11-11' of FIG. 10.

Referring to FIG. 11, the unit master molds 70U are repeatedly arranged in the X-axis direction. The unit master molds 70U are continuously arranged without gaps therebetween, and adjacent unit master molds 70U do not overlap each other.

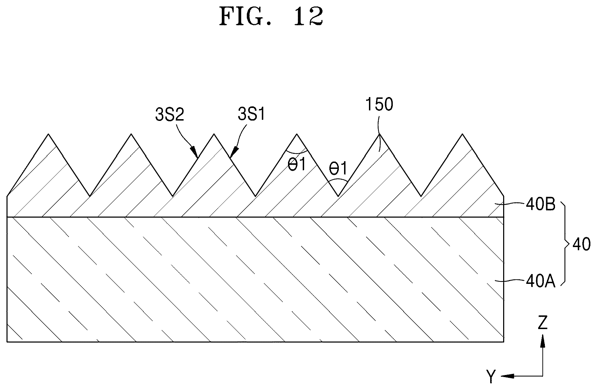

FIG. 12 is a cross-sectional view taken along a line 12-12' of FIG. 10.

Referring to FIG. 12, the second patterns 150 are repeatedly arranged without gaps therebetween.

FIGS. 1 to 12 illustrate that six second patterns 150 are formed on the upper layer 40B and 20 or fewer unit master molds 70U are formed, but this is only for convenience of illustration and explanation and is not intended to limit the number of second patterns 150 and the number of unit master molds 70U. More than six second patterns 150 may be formed on the upper layer 40B, and more than 20 unit master molds 70U may be formed.

Although many details are specifically described above, they should be construed as examples of desirable embodiments rather than as limiting the scope of the disclosure. Therefore, the scope of the present disclosure should not be determined by the embodiments described, but by the technical ideas set forth the claims.

### Industrial Applicability

A master mold for obtaining a mold for manufacturing a retro-reflective sheet according to an embodiment of the present disclosure is completed by forming a mold pattern directly on a surface of a flat surface, wherein the mold pattern is engraved by simply moving two different engraving machines sequentially in mutually perpendicular directions.

As described, according to the described method of manufacturing a master mold, because the mold pattern is formed on a plane by simply moving the two engraving machines in the mutually perpendicular directions, a pattern forming task is easy, and a resulting pattern is not complicated. Therefore, a task of transferring the mold pattern formed on the master mold to another mold substrate may be easily performed, and the transfer of the mold pattern may be completely achieved. Moreover, the mold pattern is not complicated and is formed on the plane, and the transferred mold pattern is not damaged even during repeated transfers, and thus, the master mold may be cost-effective for manufacturing the mold for a retro-reflective sheet.

## Claims

1. A master mold comprising:
a lower layer;
an upper layer provided on the lower layer; and
a plurality of unit master molds provided on the upper layer,
wherein the plurality of unit master molds are continuously aligned in a horizontal direction and a vertical direction without being spaced apart from each other,
each of the plurality of unit master molds comprises:
a first surface and a second surface that are in contact with each other to form a first angle; and
a third surface and a fourth surface that are spaced apart from each other with the first surface and the second surface therebetween,
the third surface and the fourth surface are inclined with respect to each other, and
the first surface and the second surface are in contact with the third surface and the fourth surface.

2. The master mold of claim 1, wherein
one of the third surface and the fourth surface is a vertical plane, and the other thereof forms an acute angle with respect to the vertical plane.

3. The master mold of claim 1, wherein
an edge formed by contact between the first surface and the second surface is connected to an upper vertex of the third surface and an upper vertex of the fourth surface.

4. The master mold of claim 3, wherein
one of the third surface and the fourth surface is a vertical plane, and a length of the edge is same as a height of the vertical plane.

5. The master mold of claim 3, wherein
a distance between an upper vertex of a vertical plane of a first unit master mold among the plurality of unit master molds and an upper vertex of a surface of a second unit master mold adjacent to the first unit master mold, the surface being other than a vertical plane among a first surface and a second surface, is same as a length of the edge.

6. A method of manufacturing a master mold, the method comprising:
forming, on a surface of a substrate, a first pattern having symmetry in a first direction; and
asymmetrically removing a portion of the first pattern in a second direction that is perpendicular to the first direction,
wherein the first pattern comprises a pattern enabling a second pattern having a triangular cross-section to be formed on the surface of the substrate,
a portion of the second pattern is also removed in the removing of the portion of the first pattern, and
a vertical plane and an inclined plane that is inclined with respect to the vertical plane are formed by removing the portion of the second pattern.

7. The method of claim 6, wherein
the forming, on the surface of the substrate, of the first pattern having symmetry in the first direction is performed at least twice, and then the asymmetrically removing of the portion of the first pattern is performed.

8. The method of claim 6 or claim 7, wherein
the removing of the portion of the first pattern is performed at least twice.

9. The method of claim 6, wherein,
in the forming of the first pattern, a first engraving machine is used, and the first pattern comprises a V-shaped groove.

10. The method of claim 6, wherein,
in the asymmetrically removing of the portion of the first pattern, a second engraving machine is used, and a tip of the second engraving machine, which comes into contact with the substrate, comprises a vertical plane and an inclined surface that forms an acute angle with the vertical plane.
